# EUROPÄISCHE PATENTSCHRIFT

(11) **EP 1 036 604 B1**
(45) Veröffentlichungstag und Bekanntmachung des Hinweises auf die Patenterteilung: **15.10.2003**
(21) Anmeldenummer: 00105684.5
(22) Anmeldetag: 17.03.2000
(51) Int. Cl.: B09B 3/00, F17C 13/00, F16F 9/43

(54) **Entleeren von Druckmetallbehältern für Fluide**
Emptying metallic pressure vessels for fluids
Vidage de récipients sous pression pour fluides

(30) Priorität: 17.03.1999 DE 19912010
(43) Veröffentlichungstag der Anmeldung: 20.09.2000
(73) Patentinhaber: Maschinenbau Eggerstorfer GmbH, 85764 Oberschleissheim (DE)
(72) Erfinder: Eggerstorfer, Uwe, 85764 Oberschleissheim (DE); Weihberg, Peter, 85778 Haimhausen (DE)
(74) Vertreter: Szynka, Dirk

(56) Entgegenhaltungen:
- EP-A- 0 510 350
- EP-A- 0 794 020
- EP-A- 0 879 652
- DE-C- 4 207 289
- DE-U- 9 311 482
- DE-U- 29 804 497
- FR-A- 2 759 690
- US-A- 5 730 193

## Beschreibung

Die Erfindung betrifft ein Verfahren und eine Vorrichtung zum Öffnen und Entleeren von Druckmetallbehältern für Fluide. Insbesondere richtet sich die Erfindung auf das Öffnen und Entleeren von Stoßdämpfern vor allem von Straßenfahrzeugen.

Gerade bei Altfahrzeugen und auch beim Austausch von defekten Stoßdämpfern fallen in großer Zahl zu entsorgende Stoßdämpfer an, wobei das Stoßdämpferöl aus Gründen des Umweltschutzes und, weil es sich um eine brennbare Flüssigkeit handelt, aus Sicherheitsgründen abgelassen werden muß. Hierbei handelt es sich um ein auf Schrottplätzen und in Kraftfahrzeugwerkstätten in erheblichem Umfang auftretendes technisches Problem, das bislang keine befriedigende Lösung gefunden hat.

Solche Druckmetallbehälter können auch beispielsweise Gasflaschen, in denen das unter Druck eingeschlossene Gas flüssig oder gasförmig ist, Hydraulik- oder Pneumatikzylinder und dgl. mehr sein.

Wegen des Drucks des eingeschlossenen Fluids weist der Behälter relativ starke Metallwände auf, die zum Entleeren des Behälters von dem Fluid geöffnet werden müssen. Dazu muß die Behälterwand in einer kontrollierten Weise geöffnet werden, so daß ein unkontrollierter Austritt oder ein Verspritzen des in dem Druckmetallbehälter eingeschlossenen Fluids vermieden wird. Dies hat je nach Anwendungsfall Gründe des Umweltschutzes, der Vermeidung einer Brandgefahr, des Schutzes der Umgebung vor korrosiven, giftigen oder in anderer Weise problematischen Stoffen und dgl.

Der hier beschriebenen Erfindung liegt das technische Problem zugrunde, ein verbessertes Verfahren und eine verbesserte Vorrichtung zum Öffnen und Entleeren von Druckmetallbehältern anzugeben.

Aus US 5 730 193 ist bekannt, Feuerlöscher in einer Bank mit einer hydraulischen Spannvorrichtung einzuspannen und dann mit einem spitzen Werkzeug aufzudrücken, um durch die so erzeugte Öffnung den Feuerlöscher zu entleeren. Aus EP 0 510 350 A ist bekannt, Schwingungsdämpfer mit einem Hohldorn zu perforieren und die Flüssigkeit durch den Dorn abzulassen.

Die Erfindung verbessert das bekannte Verfahren zum Öffnen und Entleeren von Druckmetallbehältern für Fluide, bei dem mit einem eine Spitze oder Schneide aufweisenden Werkzeug mit Hilfe eines Druckfluidantriebs eine Wand des Behälters langsam und gleichmäßig aufgedrückt wird, um eine Öffnung zum Entleeren zu erzeugen, durch die Merkmale des Anspruchs 1.

Weiterhin verbessert die Erfindung eine Vorrichtung zum Öffnen und Entleeren von Druckmetallbehältern für Fluide mit einem eine Spitze oder Schneide aufweisenden Werkzeug und einem Druckfluidantrieb zum langsamen und gleichmäßigen Aufdrücken einer Wand des Behälters mit dem Werkzeug zum Erzeugen einer Öffnung zum Entleeren durch die Merkmale des Anspruchs 12.

Vorteilhafte Ausgestaltungen des erfindungsgemäßen Verfahrens und der erfindungsgemäßen Vorrichtung sind in den abhängigen Ansprüchen angegeben.

Die Erfindung beruht auf folgender Erkenntnis: Ein Aufbohren oder anderweitiges spanabhebendes Öffnen einer Wand des Druckmetallbehälters ermöglicht zwar ein langsames, gezieltes und vorsichtiges Öffnen. Jedoch hat sich herausgestellt, daß die dabei erzeugten Metallspäne in erstaunlichem Umfang Schwierigkeiten beim Abführen des Druckfluids aus dem Druckmetallbehälter bereiten. Trotz verschiedener Versuche mit Filtern und dgl. konnte hier keine befriedigende Lösung erzielt werden. Überraschenderweise hat sich jedoch herausgestellt, daß es durch Einsatz eines langsam, jedoch mit großer Kraft arbeitenden Druckfluidantriebs möglich ist, ein auf eine Spitze oder eine Schneide zulaufendes Werkzeug selbst durch sehr starke Druckmetallbehälterwände hindurch zu drücken und dabei in äußerst kontrollierter Weise Öffnungen zum Abführen des Fluids aus dem Metallbehälter zu erzeugen. Gerade die Kombination der besonders gleichmäßigen und kontrollierten Krafterzeugung durch den Druckfluidantrieb, also eine Hydraulik oder Pneumatik, mit einer Spitzen- oder Schneidenform eines entsprechend hart ausgeführten Werkzeuges und ferner mit dem Metallmaterial typischer Druckbehälter von Fluiden führt dazu, daß sich das Metall der Behälterwand bei zunehmender Krafteinwirkung unter der Spitze oder der Schneide verformt und lokalisiert im Bereich dieser Spitze oder Schneide eine zunächst kleine und dann bei weiterem Eindringen des Werkzeuges größer werdende Öffnung freigibt. Die zunächst erwarteten Schwierigkeiten eines plötzlichen und unkontrollierten Aufreißens der Behälterwände bleiben überraschenderweise aus.

Diese Vorgehensweise bewährt sich insbesondere bei Stoßdämpfern, etwa von Straßenkraftfahrzeugen. Hier löst die Erfindung auch ein in besonderem quantitativen Umfang auftretendes Problem. Sie ist jedoch auch nützlich bei der Entsorgung beispielsweise von Druckgasflaschen, bei denen ein Hahn oder Ventil defekt oder korrodiert ist und die vor Verschrottung von ihrem unter hohem Druck stehenden Inhalt entleert werden müssen.

Im Fall von Stoßdämpfern an Fahrzeugen bietet es sich dann an, die Vorrichtung unter dem Fahrzeug einzusetzen und die mobile Einheit an einem Stoßdämpfer im eingebauten Zustand anzuwenden. Dazu kann eine Montagegrube oder eine Hebebühne Verwendung finden. Der besondere praktische Nutzen besteht darin, daß beispielsweise das Stoßdämpferöl ohne jede Montage an dem Fahrzeug entleert werden kann, woraufhin ein Altfahrzeug, jedenfalls was die Entsorgung der Stoßdämpfer betrifft, verschrottungsfertig ist.

Vorzugsweise enthält der vordere Bereich des Werkzeugs, der beim Öffnen der Behälterwand eindringt, eine Öffnung und einen daran anschließenden Kanal zum Ableiten des Fluids aus dem Druckmetallbehälter. Dann kann das Fluid bereits austreten, wenn die Öffnung in dem Werkzeug das Innere des Druckmetallbehälters erreicht hat.

Im übrigen ermöglicht die Erfindung natürlich auch die Entleerung mehrschichtiger Stoßdämpfer oder Druckmetallbehälter, beispielsweise indem an entsprechenden Stellen am Werkzeug mehrere Öffnungen für jeweilige Schichten des Druckmetallbehälters vorgesehen sind. Die erfindungsgemäße Methode kann dann gegebenenfalls auch für jede der Schichten separat durchgeführt werden.

Vor allem wenn aus dem Druckmetallbehälter eine Flüssigkeit entleert werden muß, jedoch auch wenn ein darin befindliches Gas völlig restfrei entnommen werden muß, besteht die Möglichkeit, den Druckmetallbehälter mit einem ungefährlichen Druckgas, beispielsweise mit Druckluft, zu beaufschlagen. Dadurch kann nicht nur die Geschwindigkeit des Ablaufens beispielsweise einer viskosen Flüssigkeit erhöht werden. Es ist vielmehr auch ein besonders vollständiges Austreiben von Flüssigkeiten oder Gasen möglich, von denen noch kleine Restmengen Schaden verursachen können. In einem einfachen Fall kann hierbei ein Druckgas Verwendung finden, mit dem auch der Druckfluidantrieb angetrieben wird.

Alternativ hierzu oder in Kombination hiermit kann der Druckmetallbehälter auch über eine Abführpumpe entleert werden. Dabei kann es von Vorteil sein, in dem Werkzeug einen separaten Druckausgleichkanal mit einer Öffnung vorzusehen, durch die bei der Entleerung mit der Abführpumpe ein Druckausgleich in dem Druckmetallbehälterinneren erfolgt. Insbesondere kann dabei die Öffnung des Druckausgleichkanals an dem Werkzeug von der oder den Öffnungen zum Abführen des Fluids dergestalt beabstandet sein, daß beim Eindringen des Werkzeugs in das Druckmetallbehälterinnere zunächst ein Ablaufen des Fluids unter einem Überdruck in dem Druckmetallbehälter ermöglicht wird, ohne daß dabei der Druckausgleichkanal mit dem Druckmetallbehälterinneren in Verbindung steht.

Besonders bewährt hat sich eine spitze Kegelform des Werkzeuges, wobei der Kegel senkrecht zur Eindringrichtung eine im wesentlichen runde Querschnittsform zeigt. Diese Form ermöglicht ein besonders gleichmäßiges Eindringen und neigt am wenigsten zur Erzeugung von Rissen in der Behälterwand.

Des weiteren liegt das Werkzeug bei einer im wesentlichen runden Querschnittsform allseitig fest an der sich verformenden Behälterwand an und bildet dabei eine so gute Abdichtung, daß das zu entnehmende Fluid praktisch nicht neben dem Werkzeug austritt.

Durch die in dem Werkzeug vorgesehene Öffnung und den daran anschließenden Kanal kann das Fluid dann aus dem Druckmetallbehälter abgeführt werden, wobei das Werkzeug selbst eine Abdichtung bildet, also insbesondere keine weitere Elastomerdichtung oder andere besondere Dichtung um das Werkzeug herum vorgesehen werden muß. Dies hat den Vorteil, daß nur der in den Behälter eingedrungene Abschnitt des Werkzeuges mit dem Fluid kontaminiert werden kann und besonders sauber gearbeitet wird.

Die Abdichtung durch die Anlage des Werkzeugs gegen die Behälterwand reicht im allgemeinen auch für die bereits beschriebene Druckgasbeaufschlagung des Behälterinneren zum vollständigen Austreiben des Behälterinhalts. Wenn die Anlage bei einer aus dem Behälter zu entleerenden Flüssigkeit, beispielsweise Stoßdämpferöl, durch diese Flüssigkeit benetzt wird, führt dies zu einer besonderen Dichtheit für nachfolgendes Gas. Im übrigen wäre eine geringe Undichtigkeit im Hinblick auf das von außen zugeführte Druckgas auch nicht sehr schädlich, weil es sich dabei um eine ungefährliche Substanz handelt.

Dabei kann dann eine weitere Öffnung im vorderen Bereich des Werkzeuges mit einem separaten Kanal für das Druckgas eingesetzt werden. Ein intermittierender Betrieb der Druckgasbeaufschlagung erlaubt allerdings auch die Verwendung ein und desselben Kanals und derselben Öffnung(en) sowohl zum Ablassen des Fluids aus dem Druckmetallbehälter als auch zur Druckgasbeaufschlagung desselben. Dies gilt insbesondere dann, wenn eine Flüssigkeit aus dem Druckmetallbehälter abgeführt werden soll, weil dann keine Vermischung zwischen dem Druckgas und der Flüssigkeit auftritt. Wenn ein Gas in dem Druckmetallbehälter mit zusätzlicher Druckgasbeaufschlagung von außen ausgetrieben werden soll, kann es sinnvoll sein, zur Druckgasbeaufschlagung ein von dem auszutreibenden Gas in der Dichte deutlich verschiedenes Druckgas zu verwenden und die Öffnung zum Entleeren entweder im oberen oder im unteren Bereich des Druckmetallbehälters anzubringen, so daß das leichtere bzw. schwerere auszutreibende Gas bevorzugt abgeführt wird.

Hinsichtlich Kosten und Baugröße ist ein Hydraulikzylinder als Druckfluidantrieb bevorzugt, wenngleich dann die Verwendung der Hydraulikflüssigkeit zum Austreiben des Behälterinhalts gegenüber einem eigenen Druckgas nicht bevorzugt in Betracht kommt.

Jedoch kann die Hydraulikversorgung dieses Hydraulikzylinders durch eine pneumatische Hydraulikpumpe erfolgen, so daß eine Kombination des Pneumatikgases für die Hydraulikpumpe mit der Druckgasbeaufschlagung für den Druckmetallbehälter in Frage kommt. Eine pneumatische Hydraulikpumpe hat femer den Vorteil, daß sie beim Umgangmit brennbaren Fluiden in dem Druckmetallbehälter, beispielsweise bei Stoßdämpferöl, sehr viel sicherer arbeitet als eine elektrische Pumpe oder ein Verbrennungsmotor. Im übrigen ist in den allermeisten für die Erfindung in Frage kommenden Werkstätten, insbesondere bei Werkstätten für die Reparatur oder Entsorgung von Kraftfahrzeugen, ohnehin eine Druckluftversorgung vorhanden. Aus den gleichen Gründen ist die bereits erwähnte Abführpumpe zum Absaugen oder Abführen des Druckmetallbehälterinhalts vorzugsweise eine pneumatisch angetriebene Pumpe.

Vorzugsweise weist die erfindungsgemäße Vorrichtung ferner ein Widerlager für die Druckmetallbehälter auf. Dieses Widerlager ist mit der Vorrichtung verbunden und nimmt die beim Aufdrücken der Behälterwand auftretenden Kräfte auf. Eine bevorzugte Ausgestaltung dieses Widerlagers weist einen Haken zum Hintergreifen des Druckmetallbehälters auf, der dazu von der Vorrichtung aus über das Werkzeug hinaus ragt. Hierzu wird auf das Ausführungsbeispiel verwiesen.

Diese Ausführung eignet sich insbesondere für die erfindungsgemäße Vorrichtung, bei der eine mobile Einheit quasi als Handgerät von einer Bedienungsperson getragen und angewendet werden kann. Natürlich können auch bei einer mobilen Vorrichtung andere Widerlagerformen eingesetzt werden oder kann auf ein Widerlager verzichtet werden, beispielsweise wenn die Vorrichtung anderweitig eingeklemmt werden kann.

Die erfindungsgemäße mobile Vorrichtung kann im Prinzip völlig unabhängig von ihrer Umgebung bewegt werden, beispielsweise wenn sie einen Druckspeicher für den Druckfluidantrieb aufweist. Praktischer ist jedoch eine Druckfluidleitung von der bewegbaren Vorrichtung zu einer Druckfluidversorgung, die stationär sein kann. Als günstigster Fall hat es sich erwiesen, wenn auch die Druckfluidversorgung, beispielsweise die pneumatikbetriebene Hydraulikpumpe, an einem Begleitwagen angebracht ist, der verfahren werden kann und von dem die Druckfluidleitung zu der bewegbaren Einheit mit dem Druckfluidantrieb und dem Werkzeug führt. Der Begleitwagen selbst könnte wiederum einen Druckspeicher aufweisen, kann jedoch auch über eigene Leitungen versorgt sein, beispielsweise mit Druckluft für eine Hydraulikpumpe oder mit Elektrizität.

Zur Klarstellung der Begriffe ist anzumerken, daß der Begriff "Handgerät" bei den Ausführungsbeispielen dazu verwendet wird, anzudeuten, daß die erfindungsgemäße Vorrichtung daneben z. B. einen Begleitwagen oder eine andere stationäre Versorgungseinrichtung umfassen kann bzw. umfaßt. Dann wird der Begriff "Vorrichtung" für die Kombination aus Handgerät und beispielsweise Begleitwagen verwendet. Die Erfindung kann natürlich auch grundsätzlich mobil ausgeführt sein, so daß dann der Begriff Vorrichtung für das Handgerät selbst zu verwenden wäre.

Insgesamt bietet die Erfindung eine äußerst praktische und einfache Möglichkeit zur gefahrlosen Entsorgung problematischer Medien aus Druckmetallbehältern und insbesondere von Stoßdämpferöl aus Fahrzeugstoßdämpfern. Die erfindungsgemäße Methode ist dabei selbst bei großen Stoßdämpfern mit starken Wänden oder bei anderen stabilen Druckmetallbehältem ohne weiteres anwendbar, wenn der Druckfluidantrieb entsprechend ausgelegt ist. Insbesondere können somit konventionelle Stoßdämpfer entleert werden, die völlig übliche Wandstärken aufweisen, also nicht etwa durch eigens für eine spätere Öffnung vorgesehene Schwachstellen in den Wänden vorbereitet sind. Das hat den Vorteil, der Anwendbarkeit der Erfindung ohne Umrüstung von Fahrzeugen, bzw. ohne Änderung in der Produktion von Stoßdämpfern.

Es folgt die Beschreibung eines konkreten Ausführungsbeispiels für die Erfindung. Dabei offenbarte Merkmale können auch einzeln oder in anderen Kombinationen erfindungswesentlich sein.

Im einzelnen zeigt die Figur eine schematische Darstellung einer erfindungsgemäßen Vorrichtung.

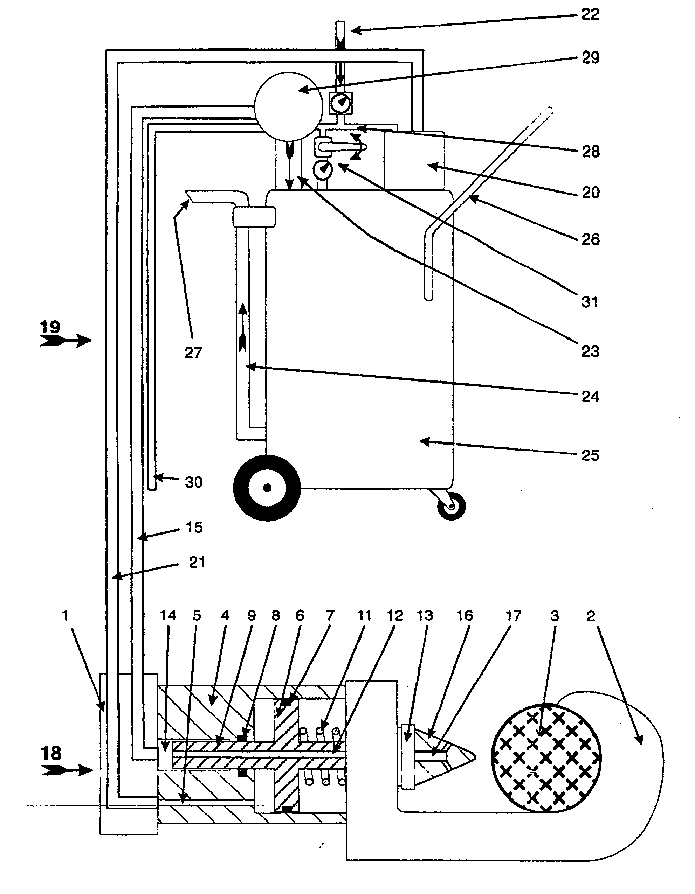

In der Figur ist ein als Handgerät zu bezeichnender mobiler Teil 18 einer erfindungsgemäßen Vorrichtung dargestellt, wobei das Handgerät 18 zum Teil geschnitten gezeichnet ist. An einem mit 1 bezeichneten Grundkörper des Handgeräts ist an einer Vorderseite ein als Widerlager dienender und über den Grundkörper 1 hinausragender Haken 2 angeschweißt. Der Haken 2 umfaßt einen in seinem kreisförmigen Querschnitt skizzierten PKW-Stoßdämpfer 3 formangepaßt und bildet dadurch zu der in Figur 1 rechten Seite hin ein Widerlager für den Stoßdämpfer 3.

Der zylinderförmige Grundkörper 1 weist einen Hydraulikzylinder 4 auf, der von einem Hydraulikkanal 5 versorgt ist. Ein Kolben 6 des Hydraulikzylinders 4 ist gegenüber der Außenwand des Hydraulikzylinders 4 verschieblich geführt und dabei durch eine mit 7 bezeichnete Dichtung gegen die Innenmantelfläche der Außenwand abgedichtet. Mit einer weiteren Dichtung 8 ist eine Kolbenstange 9 des Kolbens 6 an einem Durchtritt der Kolbenstange 9 durch einen rückseitigen Teil der Außenwand abgedichtet.

Der Hydraulikzylinder 4 arbeitet gegen die Rückstellkraft einer Rückstellschraubenfeder 11, die um eine Verlängerung der Kolbenstange 9 herum angeordnet ist und den Kolbenstempel 6 gegen einen vorderseitigen Teil der Außenwand des Grundkörpers 1 abstützt, der gleichzeitig die Basis des Hakens 2 bildet. Insgesamt liegt der Zylinderkolben 6 mit der Kolbenstange 9 einschließlich ihrer Verlängerung 13 symmetrisch zur Längsachse der Zylinderform des Grundkörpers 1.

Im Rahmen der Erfindung ist es allerdings auch möglich, anstelle einer Rückstellung des Kolbenstempels 6 durch die Rückstellschraubenfeder 11 eine hydraulische Kolbenrückführung (unter Verwendung der vorhandenen Hydraulikanlage) einzusetzen. Dies hat den Vorteil einer größeren Prozeßsicherheit, weil bei Verklemmungen beispielsweise des Werkzeugs 16 in dem Stoßdämpfer 3 durch die Hydraulikrückführung große Kräfte aufgebracht werden können. Hierzu wäre die Kammer, in der sich die Rückstellschraubenfeder 11 befindet, mit entsprechenden Hydraulikversorgungsanschlüssen zu versehen.

An der Rückseite des Grundkörpers 1 ist eine flexible Leitung 15 in abgedichteter Weise angeschlossen. Diese flexible Leitung 15 dient als Ölablaßleitung für das abzuführende Stoßdämpferöl.

An dem entgegengesetzten, also vorderseitigen Ende 13 der Verlängerung der Kolbenstange 9 ist in die Verlängerung ein Aufdrückwerkzeug 16 mit einer spitzen Rundkegelform in dem über die Verlängerung hinausragenden Abschnitt in fester und abgedichteter Weise eingesetzt. Das Werkzeug 16 weist einen sich über den größten Teil der Länge des Werkzeugs 16 entlang dessen Längsachse erstrekkenden Kanal 17 auf, der kurz vor dem vorderseitigen spitzen Ende des Werkzeugs 16 seitlich mit zwei Öffnungen in die Mantelfläche der Rundkegelform mündet. Dieser Kanal 17 dient ebenfalls als Ölablaßkanal und kommuniziert dementsprechend über einen Innenraum 12 der Zylinderstange 9, einen Innenraum 14 des Grundkörpers, in dem die Kolbenstange 9 verschieblich ist, und eine Leitung in der Rückseite des Grundkörpers 1 mit der bereits erwähnten flexiblen Leitung 15.

Die in der Figur schematisch dargestellte flexible Leitung 15 führt von dem Handgerät 18 zu einem insgesamt mit 19 bezeichneten Begleitwagen. Ferner ist an dem Hydraulikkanal 5 des Hydraulikzylinders 4 eine Hydraulikleitung 21 angeschlossen, die mit der flexiblen Druckluft- und Ölablaßleitung 15 zusammengelegt und mit dieser ebenfalls zu dem Begleitwagen 19 geführt ist. Die Leitung 21 mündet in eine pneumatisch betriebene Hydraulikpumpe 20 des Begleitwagens 19. Dabei ist eine pneumatisch betriebene Hydraulikpumpe einfach und zuverlässig sowie im Fall von brennbaren Flüssigkeiten, wie beispielsweise Stoßdämpferöl, wegen der Funkenfreiheit sehr viel sicherer als eine elektrische Vorrichtung. Ferner liegen bei den hier in Frage kommenden Einsatzorten, nämlich vorzugsweise Kraftfahrzeugwerkstätten und Schrottplätzen, in den allermeisten Fällen Druckluftanschlüsse vor, so daß ein zusätzlicher Installationsaufwand entfällt.

Die Hydraulikpumpe 20 ist über eine Pneumatikleitung 28 versorgt von einem Pneumatikanschluß 22 des Begleitwagens 19, der wiederum durch eine nitch dargestellte flexible Pneumatikleitung mit einem Druckluftanschluß am Einsatzort der Vorrichtung verbunden ist.

Die zweite Leitung 15, also die Ölablaßleitung, führt, wie erwähnt neben der Hydraulikleitung 21 liegend, zu dem Begleitwagen 19 und ist dort an einer pneumatischen Abführpumpe 29 angeschlossen, von der aus das Öl durch eine Ölablaßleitung 23 abfließen kann. Sie ist ferner über ein letztes Druckluftleitungsstück an dem Pneumatikanschluß 22 angeschlossen.

Die hier dargestellte Vorrichtung kann einerseits so verwendet werden, daß die über den Pneumatikanschluß 22 betriebene Abführpumpe 29 Stoßdämpferöl aus einem aufgedrückten Stoßdämpfer 3 absaugt und über die Ölablaßleitung 23 abführt oder zumindest dessen Ablaufen unterstützt. Andererseits steht hier auch die zuvor bereits erläuterte Möglichkeit, durch eine entsprechende Steuerung eine intermittierende Beaufschlagung der Leitung 15 und damit des Stoßdämpferinneren mit Druckluft vorzunehmen, wobei durch die Druckluftstöße durch dieselbe Leitung 15 Stößdämpferöl abgeführt wird. In diesem Fall wäre das mit 29 bezeichnete Teil dazu vorgesehen, seinen Pneumatikanschluß intermittierend mit der Leitung 15 zu verbinden und zwischen diesen Phasen das zurückfließende Stoßdämpferöl durch die Ölabflußleitung 23 ablaufen zu lassen. Beide Möglichkeiten können natürlich auch kombiniert sein. Weiterhin kann eine flexible, von der pneumatischen Pumpe 29 abgehende Leitung 30 vorgesehen sein, die in einer weiter unten beschriebenen Weise als Saugrüssel für Ölreste in dem Stoßdämpfer 3 dienen kann.

Für den beschriebenen Fall des Abführens des Stoßdämpferöls mit der Abführpumpe 29 hat es sich als günstig herausgestellt, in dem Werkzeug 16 einen in der Figur nicht eingezeichneten weiteren Kanal als Druckausgleichkanal vorzusehen, der in eine Öffnung in der Mantelfläche des Werkzeugs 16 mündet. Diese Öffnung ist im Hinblick auf die axiale Dimension so angeordnet, daß sie beim Eindringen des Werkzeugs 16 später mit dem Inneren des Stoßdämpfers 3 in Verbindung tritt als die Öffnungen des Kanals 17. Dadurch ist es möglich, zunächst das Werkzeug 16 so weit in den Stoßdämpfer 3 eindringen zu lassen, daß der Überdruck in dem Stoßdämpfer 3 einen ersten Teil des Stoßdämpferöls durch den Kanal 17 in der beschriebenen Weise austreibt. Bevor nun die Abführpumpe 29 in Betrieb gesetzt wird, wird das Werkzeug 16 weiter in den Stoßdämpfer 3 hineingefahren, so daß der Druckausgleichkanal seine Funktion erfüllen kann und beim Abführen des Stoßdämpferöls mit Hilfe der Abführpumpe 29 für einen Druckausgleich im Inneren des Stoßdämpfers 3 sorgt.

Unterhalb der Abführpumpe 29 führt die Ölablaßleitung 23 zu einem mit einem transparenten Steigrohr als Ölstandsanzeige 24 versehenen Stoßdämpferöltank 25. Der Stoßdämpferöltank 25 bildet den Grundkörper des Begleitwagens 19, ist über zwei Hauptrollen und eine kleinere dritte lenkbare Rolle fahrbar und zum Verfahren mit einem Schieberhandgriff 26 ausgestattet. Ferner weist das Steigrohr 24 an seinem oberen Ende einen Entsorgungsanschluß 27 auf, über den in dem Öltank 25 angesammeltes Öl, wenn die Ölstandsanzeige 24 einen hohen Ölstand anzeigt, zur Entsorgung abgeführt werden kann. Dazu kann ein flexibler Schlauch angeschlossen werden.

Die Arbeitsweise der in den Figuren 1 und 2 dargestellten Vorrichtung ist wie folgt: Das Handgerät 18 wird zunächst, z. B. unter einer Hebebühne, an einen Stoßdämpfer 3 eines Kraftfahrzeugs im eingebauten Zustand angelegt, wobei der Hydraulikkolben 6 und damit die Kolbenstange 9 und das Werkzeug 16 durch die Rückstellkraft der Schraubenfeder 11 zurückgefahren sind, so daß der Haken 2 um den Stoßdämpfer herumgelegt werden kann. Dann kann durch entsprechende Betätigung der Hydraulikpumpe 20 an dem Begleitwagen 19 über die Hydraulikleitung 21 der Hydraulikzylinder beaufschlagt werden, so daß sich der Hydraulikkolben 6 gegen die Kraft der Feder 11 verschiebt und das Werkzeug 16 langsam und kontrolliert in die Wand des Stoßdämpfers 3 eingedrückt wird.

Wenn die Spitze des Werkzeugs die Wand des Stoßdämpfers 3 durchstoßen hat und die seitlichen Öffnungen des Kanals 17 in dem Werkzeug 16 im Innenbereich des Stoßdämpfers 3 liegen, wird die Hydraulikpumpe 20 gestoppt, so daß kein weiterer Vorschub erfolgt, jedoch eine Andruckkraft des Werkzeugs 16 gegen die Wand des Stoßdämpfers 3 erhalten bleibt. Dadurch ist der Kontakt zwischen der Mantelfläche der spitzen Rundkegelform des Werkzeugs 16 und der Stoßdämpferwand sowohl für das Stoßdämpferöl als auch weitgeoend für Druckluft dicht Nun kann zunächst durch den Überdruck des Stoßdämpferinneren ein erster Teil des Stoßdämpferöls durch den Kanal 17 in dem Werkzeug 16, durch den Innenraum 12 der Kolbenstange 9, den Innenraum 14 und durch die Leitungen 15 und 23 in den Öltank 25 abfließen.

Durch den geschilderten intermittierenden Betrieb kann dann durch die Leitung 15 das Innere des Stoßdämpfers 3 mit Druckluft beaufschlagt werden, wobei in den Pausen des intermittierenden Betriebs jeweils das Stoßdämpferöl in kurzen Stößen durch die Leitung 15 in den Tank 25 abfließt. In dieser Weise kann der Stoßdämpfer 3 vollständig entleert werden. Das Volumen des Öltanks 25 reicht dabei für eine große Zahl von Stoßdämpfern 3 aus und muß beispielsweise nur einmal pro Arbeitstag durch den Entsorgungsanschluß 27 entleert werden.

Alternativ dazu kann die pneumatische Abführpumpe 29 zum Absaugen oder Abführen des Stoßdämpferöls eingesetzt werden. Diese Pumpe ist eine Schaufelradpumpe, die in vielen Fällen im Grunde nur den durch einen Gasüberdruck über dem Stoßdämpferöl in dem Stoßdämpfer 3 selbsttätig erfolgenden Ablauf des Stoßdämpferöls unterstützt. Dabei kann in der Leitung 15 ein Unterdruck auftreten, dies muß jedoch nicht unbedingt der Fall sein.

Für kleine Reste von Stoßdämpferöl in dem Stoßdämpfer 3 ist die bereits erwähnte Leitung 30 vorgesehen, die quasi als Saugrüssel per Hand in den Stoßdämpfer 3 eingeführt werden kann, nachdem das Werkzeug 16 durch den Zylinder 4 zurückgefahren worden ist und die Öffnung in dem Stoßdämpfer 3 freigibt. Mit der Pumpe 29 kann insoweit eine letzte _{"}Pfütze" des Stoßdämpferöls abgesaugt werden.

Wie sich aus der Figur deutlich ergibt, kann bei diesem Verfahren das Handgerät 18 von einer Bedienungsperson per Hand bewegt und unter einem Pkw angebracht werden. Hierzu sind die Leitungen 15, 21 und 30 ausreichend lang und flexibel ausgeführt. Mit Hilfe der Rollen und des Handgriffs 26 kann der Begleitwagen 19 in die Nähe des Einsatzortes mitgeführt werden, jedoch beispielsweise neben der Hebebühne verbleiben,so daß seine Bauhöhe für die praktische Anwendung keine Rolle spielt. Der Begleitwagen 19 ist seinerseits wieder über eine flexible und ausreichend lange Leitung mit einer Preßluftversorgung verbunden, mit deren Hilfe die Abführpumpe 29 und die Hydraulikpumpe 20 betrieben werden. Somit ist auch der Begleitwagen 19 im Rahmen der Länge dieser Leitung leicht verfahrbar und ermöglicht einen entsprechend flexiblen Einsatz.

Von Vorteil ist zum einen, daß mit Hilfe der Hydraulikpumpe 20 ein relativ großer Druck in dem Zylinder 4 aufgebaut werden kann, so daß bei vertretbaren Querschnitten des Zylinders 4 und somit bei vertretbarer Größe des Handgeräts 18 auf das Werkzeug 16 sehr große Kräfte ausgeübt werden können. Damit können auch starke Stoßdämpferwände oder andere Wände von Druckmetallbehältern durchdrungen werden. Es ist insbesondere nicht notwendig, die Stoßdämpfer oder andere Druckmetallbehälter mit besonderen Schwachstellen zu versehen, an denen sie aufgedrückt werden können. Somit können konventionelle Stoßdämpfer und Druckmetallbehälter entleert werden, die in großer Zahl im praktischen Einsatz sind.

Andererseits ermöglicht die Verwendung einer steuerbaren Hydraulikpumpe 20 eine sehr kontrollierte Kraftausübung, so daß die zu durchstoßenden Wände langsam und gleichmäßig aufgedrückt werden, wobei keine Risse entstehen, sondern sich vielmehr eine relativ glatte und abdichtende Anlage zwischen der Mantelfläche des Werkzeugs 16 und der aufgedrückten Wand ergibt. Dadurch sind keine weiteren Dichtungen an dieser Stelle vonnöten, so daß durch den intermittierenden Betrieb mit Hilfe eines einzigen Kanals 17 in dem Werkzeug 16 (mit einer oder mehreren Öffnungen) in schneller und einfacher Weise die zu entsorgende Flüssigkeit aus dem Druckmetallbehälter abgeführt werden kann. Bei geeignetem Ansetzpunkt des Werkzeugs 16 an der Wand beispielsweise des Stoßdämpfers 3 kann die zu entsorgende Flüssigkeit praktisch rückstandsfrei entnommen werden, wobei durch die dichte Anlage zwischen dem Werkzeug 16 und der Wand auch eine Kontamination der Umgebung vermieden werden kann. Bei all diesen praktischen Vorteilen ist die Vorrichtung insgesamt dennoch sehr einfach und kostengünstig aufgebaut und im Betrieb sehr zuverlässig.

## Patentansprüche

1. Verfahren zum Öffnen und Entleeren von Druckmetallbehältern (3) für Fluide, bei dem mit einem eine Spitze oder Schneide aufweisenden Werkzeug (16) einer Vorrichtung mit Hilfe eines Druckfluidantriebs (4) der Vorrichtung eine Wand des Behälters (3) langsam und gleichmäßig aufgedrückt wird, um eine Öffnung zum Entleeren zu erzeugen, wobei
der Druckmetallbehälter (3) zum Austeiben des Fluids durch eine Druckgaseinrichtung (22) mit einem Druckgas (15) beaufschlagt wird, **dadurch gekennzeichnet, daß** das Druckgas über dieselbe einzige Öffnung beaufschlagt wird.

2. Verfahren nach Anspruch 1, bei dem Fluid aus dem Druckmetallbehälter (3) durch eine Öffnung in einem in die Behälterwand eingedrungenen vorderen Bereich des Werkzeugs (16) und durch einen Kanal (17) in dem Werkzeug (16) abgeleitet wird.

3. Verfahren nach einem der vorstehenden Ansprüche, bei dem das Fluid durch eine Abführpumpe (29) aus dem Druckmetallbehälter (3) abgeführt wird.

4. Verfahren nach Anspruch 3, bei dem ein Druckausgleich des Druckmetallbehälters (3) durch einen Druckausgleichkanal in dem Werkzeug (16) erfolgt, nachdem Fluid aus dem Druckmetallbehälter (3) unter einem Überdruck in dem Druckmetallbehälter (3) abgeleitet worden ist, indem der Druckausgleichkanal erst danach durch ein weiteres Eindringen des Werkzeuges (16) in den Druckmetallbehälter (3) mit dessen Innerem in Verbindung gebracht wird.

5. Verfahren nach einem der Ansprüche 3 und 4, bei dem nach Freigabe des Druckmetallbehälters (3) durch das Werkzeug (16) eine Saugleitung (30) zum Abführen letzter Fluidreste durch die von dem Werkzeug (16) in dem Stoßdämpfer (3) erzeugte Öffnung verwendet wird.

6. Verfahren nach einem der vorstehenden Ansprüche, bei dem das Werkzeug (16) eine spitze Rundkegelform aufweist und die Anlage des Werkzeugs (16) gegen die Behälterwand eine Abdichtung für das Fluid und für das Druckgas bildet.

7. Verfahren nach einem der vorstehenden Ansprüche, zumindest nach Anspruch 2, bei dem die Druckgasbeaufschlagung (15, 22) intermittierend und durch dieselbe Öffnung bzw. dieselben Öffnungen wie die Fluidableitung erfolgt.

8. Verfahren nach einem der vorstehenden Ansprüche, bei dem der Druckfluidantrieb mit Hilfe eines Hydraulikzylinders (4) erfolgt, der von einer pneumatischen Hydraulikpumpe (20) versorgt wird.

9. Verfahren nach einem der vorstehenden Ansprüche, bei dem der Druckmetallbehälter (3) durch ein mit der Vorrichtung verbundenes Widerlager (2) gehalten wird und das Widerlager (2) gebildet ist durch einen über das Werkzeug hinausragenden Haken.

10. Verfahren nach einem der vorstehenden Ansprüche, bei dem die Vorrichtung einen mobilen Teil (18) aufweist, der mit dem Werkzeug (16) und dem Druckfluidantrieb (4) von einer Bedienungsperson gehoben, gehalten und bewegt wird, der mobile Teil (18) durch eine Druckfluidleitung (15) versorgt wird und die Druckfluidleitung zu einem Begleitwagen (19) führt.

11. Verfahren nach einem der vorstehenden Ansprüche, bei dem konventionelle Stoßdämpfer (3) ohne für das Verfahren ausgelegte Wandschwachstellen geöffnet und entleert werden.

12. Vorrichtung zum Öffnen und Entleeren von Druckmetallbehältern (3) für Fluide mit einem Verfahren nach einem der vorstehenden Ansprüche, wobei die Vorrichtung einen eine Spitze oder Schneide aufweisenden Hobldorn (16) und einen Druckfluidantrieb (4) zum langsamen und gleichmäßigenAufdrücken einer Wand des Behälters (3) mit dem Hobldorn (16) zum Erzeugen einer Öffnung zum Entleeren aufweist,
**gekennzeichnet durch** eine Druckgaseinrichtung (22) zum Beaufschlagen des Druckmetallbehälters (3) zum Austreiben des Fluids mit einem Druckgas (15) **durch** dieselbe einzige Öffnung hindurch über durselben Hobldorn (16).

13. Vorrichtung nach Anspruch 12, Bei der eine Öffnung zum Ableiten von Fluid dem druckmetallbehälterseitigen Ende des Werkzeugs (16) näher ist als eine Öffnung des Druckausgleichkanals in dem Werkzeug (16).

## Claims

1. A method for opening and emptying metallic compressed fluid containers (3), in which a wall of said container (3) is slowly and evenly pierced with a tool (16) tipped with a sharp point or edge of a device powered by a compressed fluid drive (4) to produce an opening for emptying,
wherein said metallic compressed fluid container (3) is charged with a compressed gas (15) from a compressed gas means (22) to expel said fluid,
**characterized in that** said compressed gas (15) is charged via one and the same opening.

2. The method as set forth in claim 1 wherein fluid is discharged from said metallic compressed fluid container (3) through an opening in a front portion of said tool (16) having penetrated into said container wall and through a passage (17) in said tool (16).

3. The method as set forth in any of preceding claims wherein said fluid is discharged from said metallic compressed fluid container (3) by an discharging pump (29).

4. The method as set forth in claim 3 wherein the pressure in said metallic compressed fluid container (3) is compensated through a pressure compensation passage in said tool (16) after fluid has been discharched from said metallic compressed fluid container (3) with overpressure in said metallic compressed fluid container (3) in that said pressure compensation passage first is connected only thereafter with the interior of said metallic compressed fluid container (3) by further penetration of said tool (16) into said metallic compressed fluid container (3).

5. The method as set forth in any of the claims 3 and 4 wherein after said metallic compressed fluid container (3) has been released from said tool (16) a suction line (30) is used for discharging last remainders of fluid through said opening produced by said tool (16) in said metallic compressed fluid container (3).

6. The method as set forth in any of the preceding claims wherein said tool (16) is shaped pointed round and conical and contact of said tool (16) against said container wall forms a fluid and compressed gas seal.

7. The method as set forth in any of the preceding claims, at least as set forth in claim 2 wherein charging with said compressed gas (15, 22) is done intermittently and through the same opening(s) as for discharging said fluid.

8. The method as set forth in any of the preceding claims wherein said compressed fluid drive is done by means of a hydraulic cylinder (4) supplied by a pneumatically driven hydraulic pump (20).

9. The method as set forth in any of the preceding claims wherein said metallic compressed fluid container (3) is held by a counter-mount (2) connected to said device and said counter-mount (2) is formed by a hook protruding from said tool.

10. The method as set forth in any of the preceding claims wherein said device comprises a mobile part (18) which together with said tool (16) and said compressed fluid drive (4) is lifted, held and moved by an operator, said mobile part (18) being supplied by a compressed fluid line (15) and said compressed fluid line leading to a tender (19).

11. The method as set forth in any of the preceding claims wherein conventional shock absorbers (3) are opened and emptied without weak points being provided in the wall thereof.

12. A device for opening and emptying metallic compressed fluid containers (3) by a method as set forth in any of the preceding claims, said device including a tool (16) comprising a sharp point or edge as well as a passage (17), and a compressed fluid drive (4) for slowly and evenly piercing a wall of said metallic compressed fluid container (3) with said tool (16) to produce an opening for emptying,
**characterized by** a compressed gas means (22) for charging said metallic compressed fluid container (3) to expel said fluid with a compressed gas (15) through one and the same opening via the same tool (16).

13. The device as set forth in claim 12 wherein an opening for discharging fluid is nearer to the end of said tool (16) facing said metallic compressed fluid container than an opening of said pressure compensation passage in said tool (16).

## Revendications

1. Procédé pour ouvrir et vidanger des réservoirs métalliques sous pression (3) pour fluides avec lequel un outil (16) comportant une pointe ou une lame et faisant partie d'un dispositif à entraînement hydraulique ou pneumatique est utilisé pour réaliser une ouverture par pénétration lente et régulière dans la paroi du réservoir (3) afin de pouvoir le vidanger,
le fluide étant expulsé dudit réservoir métallique sous pression (3) en lui appliquant un gaz d'injection (15) au moyen d'une installation pneumatique,
**caractérisé en ce** sens que l'application du gaz d'injection se fait par ladite ouverture.

2. Procédé selon la revendication 1 avec lequel un fluide est évacué du réservoir métallique sous pression (3) par une ouverture, réalisée dans une partie avant de l'outil (16) pénétrée dans la paroi du réservoir, et par un conduit (17) dans l'outil (16).

3. Procédé selon une des revendications précédentes avec lequel le fluide est évacué du réservoir métallique sous pression (3) au moyen d'une pompe d'évacuation (29).

4. Procédé selon la revendication 3 avec lequel s'effectue une égalisation de la pression du réservoir métallique (3) par un conduit d'égalisation de pression aménagé dans l'outil (16), ladite égalisation de la pression se faisant après évacuation du fluide en surpression du réservoir métallique (3) en ce sens que le conduit d'égalisation de pression n'est mis en contact avec l'intérieur du réservoir métallique sous pression (3) qu'après la évacuation et par une pénétration subséquente de l'outil (16) dans la paroi dudit réservoir métallique sous pression (3).

5. Procédé selon une des revendications 3 ou 4 avec lequel une conduite d'aspiration (30) est utilisée pour évacuer les résidus de fluide par l'ouverture réalisée par l'outil (16) dans le réservoir métallique (3) après dégagement de l'outil (16) du réservoir métallique (3).

6. Procédé selon une des revendications précédentes avec lequel l'outil (16) comporte une forme conique pointue et avec lequel l'appui de l'outil (16) sur la paroi du réservoir réalise l'étanchéité au fluide du réservoir et au gaz d'injection.

7. Procédé selon une des revendications précédentes, du moins selon la revendication 2, avec lequel l'application de gaz d'injection (15, 22) s'effectue par intermittence par la même ouverture ou par les mêmes ouvertures par laquelle ou lesquelles s'effectue l'évacuation du fluide.

8. Procédé selon une des revendications précédentes avec lequel l'entraînement hydraulique ou pneumatique s'effectue à l'aide d'un vérin hydraulique (4) qui est alimenté par une pompe hydraulique à entraînement pneumatique (20).

9. Procédé selon une des revendications précédentes avec lequel le réservoir métallique sous pression (3) est arrêté par un dispositif de retenue (2), ledit dispositif de retenue (2) étant composé d'un crochet en saillie dépassant l'outil.

10. Procédé selon une des revendications précédentes avec lequel le dispositif comporte un élément mobile (18), dont le levage, le maintien et le déplacement sont assurés en combinaison avec l'outil (16) et l'entraînement hydraulique (4) par un opérateur, ledit élément mobile (18) étant alimenté par une conduite hydraulique ou pneumatique en provenance d'un chariot d'accompagnement (19).

11. Procédé selon une des revendications précédentes avec lequel l'ouverture et la vidange d'amortisseurs (3) de type conventionnel peuvent être assurées sans que lesdits amortisseurs comportent de points faibles spécialement conçus à cet effet.

12. Dispositif permettant l'ouverture et la vidange d'un réservoir métallique sous pression (3) du moyen d'un procédé selon une des revendications précédentes, ledit dispositif comportant un outil (16) à pointe ou à lame (6) avec un conduit (17) et comportant également un entraînement hydraulique ou pneumatique (4) pour assurer une ouverture de vidange dans la paroi du réservoir métallique (3) par pénétration lente et régulière dudit outil (16),
**caractérisé en ce** sens qu'une installation de gaz d'injection (22) assure une mise sous pression du réservoir métallique sous pression (3) par un gaz d'injection (15) afin d'expulser ledit fluide par ladite ouverture et à travers ledit outil (16).

13. Dispositif selon la revendication (12) sur lequel une ouverture d'évacuation du fluide est plus près de l'extrémité côté réservoir métallique sous pression de l'outil (16) que l'orifice du conduit d'égalisation de pression.
